# EUROPEAN PATENT SPECIFICATION

(11) **EP 2 633 306 B1**
(45) Date of publication and mention of the grant of the patent: **23.03.2016**
(21) Application number: 11836717.6
(22) Date of filing: 24.10.2011
(51) Int. Cl.: G01N 30/46, B01D 15/18, G01N 30/60, G01N 30/88

(54) **CHROMATOGRAPHY SYSTEM WITH GUARD COLUMNS**
CHROMATOGRAPHIESYSTEM MIT SICHERUNGSSÄULEN
SYSTÈME DE CHROMATOGRAPHIE COMPORTANT DES COLONNES DE GARDE

(30) Priority: 27.10.2010 SE 1051116
(43) Date of publication of application: 04.09.2013
(73) Proprietor: GE Healthcare Bio-Sciences AB, 75184 Uppsala (SE)
(72) Inventor: LACKI, Karol, S-751 84 Uppsala (SE)
(74) Representative: Larsson, Jan Anders
(86) International application number: PCT/SE2011/051254
(87) International publication number: WO 2012/057676

(56) References cited:
- WO-A2-02/055654
- JP-A- 6 043 145
- US-A- 4 826 603
- US-A- 4 851 355
- US-A1- 2006 157 647
- US-B1- 6 358 692
- US-B1- 7 520 920
- EDHOLM L E ET AL: "AUTOMATED BIOANALYSIS OF DRUGS USING COUPLED COLUMN LIQUID CHROMATOGRAPHY FOR SAMPLE PRETREATMENT. \ASPECTS OF QUALITY ASSURANCE AND COLLABORATIVE AUTOMATED HANDLING OF DATA", LABORATORY AUTOMATION & INFORMATION MANAGEMENT, ELSEVIER SCIENCE PUBLISHERS BV., AMSTERDAM, NL, vol. 17, no. 2, 1 November 1992 (1992-11-01), pages 233-242, XP000322665, ISSN: 1381-141X

## Description

### TECHNICAL FIELD OF THE INVENTION

The present invention relates to chromatographic separations and in particular to large-scale chromatographic separation of biomolecules such as monoclonal antibodies. More specifically it relates to a chromatography system with guard columns and to a semi-continuous method of operating such a system.

### BACKGROUND OF THE INVENTION

In the biopharmaceutical field, recent advancements in genetic engineering and cell culture technology have driven expression levels higher than ever, putting a considerable burden on down-stream purification, especially the capture step. While the introduction of new chromatography resins significantly improves the efficiency of a process based on conventional single-column chromatography, additional gains can be achieved by operating in a cyclic mode with several columns. This has been applied in different varieties of continuous or semi-continuous chromatography, e.g. simulated moving bed chromatography (SMB) as described in WO2008153472 and in periodic countercurrent chromatography (PCC) as described by Heeter et al (Heeter G.A. and Liapis A.I. J Chromatography A 711, 3-21 (1995)).

Binding capacity of a chromatography column for the solute is a very important factor in process chromatography. The binding capacity directly influences the productivity and cost of chromatography step. The binding capacity is defined either in terms of dynamic/breakthrough capacity or as the maximum binding capacity. The dynamic capacity depends on the conditions at which the solution flows through the column packed with chromatography medium, such as residence time defined as the ratio between column volume and feed flow rate. The maximum binding capacity represents a breakthrough capacity of the column if the residence time was infinitely long. The initial breakthrough capacity is defined as the amount of binding solutes taken up by a column at the point when the solutes are first detected in the effluent. The breakthrough capacity can also be defined as a capacity at a given percentage of breakthrough, where the percentage represents the amount of binding solute present in the effluent from the column expressed in percent of the solute present in the feed. According to this definition the maximum binding capacity will be equal to breakthrough capacity at 100% of breakthrough, i.e., at the point where no more solute can bind to the column. Therefore, in order to determine maximum capacity, the breakthrough capacities are measured at different levels of breakthrough, where the levels are defined by levels of concentration of solutes measured in the effluent from the column during sample loading. Often these concentrations are determined by continuously monitoring a signal in a flow through a detector placed in the effluent line. The plot of these concentrations (signal) against time (or volume or mass loaded) is called a breakthrough curve. Location of the breakthrough on a chromatogram and its shape is related to how much solute can bind on the column and how quickly all adsorption sites are saturated with the solute. It also shows how much more solute can be bound to the column at any given time. Breakthrough binding capacity for the solute in the presence of the impurities is one of the most critical parameters to optimize when developing a purification protocol.

A typical process for downstream processing of monoclonal antibodies involves a capture step using a resin with protein A ligands to bind the antibodies with very high selectivity. This is a highly efficient step in that the majority of the impurities are removed here. However, due to the cost of the protein A resin, there is a strong incentive to optimize the efficiency, e.g. by chemical engineering methods that increase the utilization of the resin's binding capacity. After the protein A step, the antibodies are further purified in other chromatography steps, e.g. bind-elute cation exchange chromatography and/or in bind-elute or flowthrough multimodal or anion exchange chromatography. Also in these steps there is a need to increase the capacity utilization of the resins used, particularly when the steps are run in bind-elute mode.

The use of a small disposable guard column before a larger column is well known from single column chromatography, as a means to increase the lifetime of the main column. When irreversible fouling occurs, only the guard column will be damaged and can be changed to a fresh column. This arrangement will however not give any improvement of the resin capacity utilization. Guard columns before and after a main column are disclosed in JP 6043145A, US7520920 and in L Edholm et al: Lab. Autom. Inf. Manag. 17(2), 233-242, 1992.

Although continuous chromatography methods like SMB and PCC have the potential to improve capacity utilization, they are complicated methods to set up and run, involving the control of a large number of valves and columns. Hence, there is a need for a simple and robust solution that increases capacity utilization compared to single column chromatography.

### SUMMARY OF THE INVENTION

One aspect of the invention is to provide an efficient process for large scale chromatographic separation of biomolecules. This is achieved with a chromatography system as defined in claim 1 and with a chromatography method as defined in claim 9.

One advantage with such a system and method is that the binding capacity of the chromatography medium is efficiently utilized. Another advantage is that the life time of the chromatography medium is extended. Both these effects contribute to an improved economy of the chromatographic separation.

Further suitable embodiments of the invention are described in the depending claims.

### BRIEF DESCRIPTION OF THE DRAWINGS

Fig. 1 shows a chromatography system according to the invention.
Fig. 2 shows a method for chromatographic separation according to the invention.

### DEFINITIONS

The term "feed" herein means a liquid provided to a chromatography system and comprising a target substance to be purified. The target substance can be a biomolecule, such as a monoclonal antibody. Examples of feeds can be clarified fermentation broths, biological fluids etc. as well as liquids originating from a previous separation step and comprising a partially purified target substance.

The term "guard column" herein means a chromatography column serially connected with a main chromatography column and which has a significantly smaller volume than the main column.

### DETAILED DESCRIPTION OF EMBODIMENTS

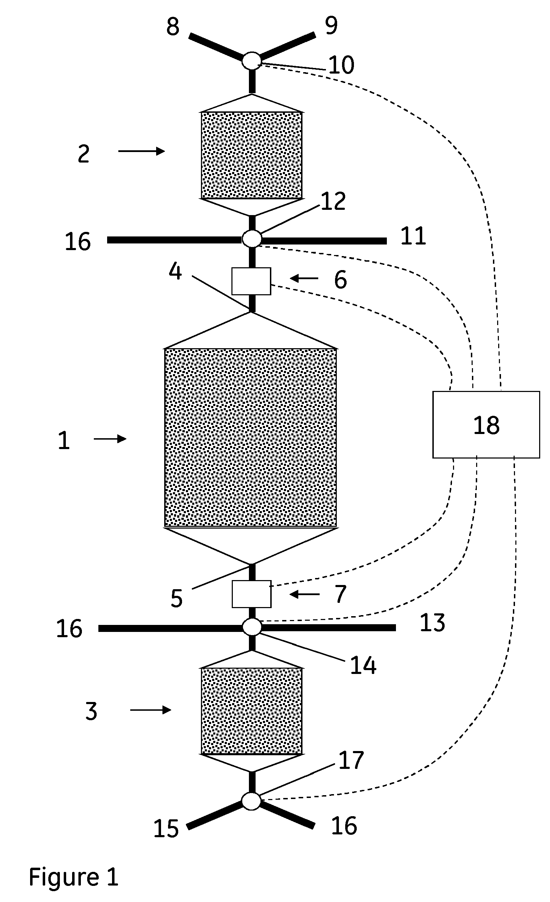

In one aspect illustrated by Figure 1, the present invention discloses a chromatography system that comprises a main column **1** comprising a chromatography resin, a first guard column **2** and a second guard column **3,** wherein the first guard column **2** is connected to a first end **4** of the main column **1,** the second guard column **3** is connected to a second end **5** of the main column. In other words, one guard column is connected to each end of the main column. An advantage of having one guard column connected to each end of the main column is that it is then possible to run the separation with an improved capacity utilization of the chromatography resin.

In certain embodiments, the bed volumes of the first and second guard columns are each less than about 50%, such as less than about 25%, less than about 15% or less than about 10%, of the bed volume of the main column **1.** An advantage of this is that the chromatography resin is used more efficiently. The bed volume of the main volume can be at least one litre, such as at least 10 litres, or at least 100 litres, as there are particular advantages of using the invention in large-scale preparative chromatography for e.g. separation of biopharmaceuticals, where it is of importance to increase the resin capacity utilization.

A first concentration detector **6** is connected between the first end **4** of the main column **1** and the first guard column **2** and a second concentration detector **7** is connected between the second end **5** of the main column **1** and the second guard column **3.** The first and second concentration detectors can be ultraviolet absorption detectors, which are convenient for detecting the concentration of e.g. proteins. They can however also be e.g. refractive index detectors which can be used to detect non UV-absorbing substances or they can be specific detectors for various target substances or contaminants. An advantage of having detectors in these positions is that it is then possible to monitor the breakthrough of the main column in both upflow and downflow directions, providing a possibility to control the flowpath through the system once a breakthrough is detected. The monitoring of the breakthrough can be done manually or automatically and the controlling of the flowpath can be done manually or automatically.

In one embodiment the chromatography system also comprises a determining unit **18** electrically connected to the first **6** and second **7** concentration detectors and adapted to detect a feed signal being representative of the composition of a feed material provided to one end **4,5** of the main column and an effluent signal being representative of an effluent from the opposite end the main column and an effluent signal being representative of an effluent from the opposite end **5,4**of the main column. The determining unit **18** can in one embodiment be adapted to determine a breakthrough point and/or a saturation point of the main column **1.** The determining unit **18** can be a computer, a programmable logic controller or any other type of digital or analog unit capable of controlling valves depending on a function calculated from the concentration detector signals. Breakthrough points can be calculated by comparing the signal measured on the first detector **6** and the second detector **7.** The signal measured on the first detector **6** represents (in the case of a UV detector) the concentration of all UV absorbing components present in the feed, i.e, both those binding to the first guard column **2** and those passing through. The signal reaches a first plateau when the non-adsorbing substances break through the guard column **2,** and then a second plateau when the first guard column **2** becomes saturated. The second plateau represents the total concentration of all the substances present in the feed stream. The second detector **7** monitors the concentration of substances in the effluent stream from the column 1. The first breakthrough point is reached when the difference between the signal measured on the second detector reaches a predetermined value of for instance 1% of the difference between the second plateau measured on the first detector and the first plateau measured on the second detector. The second breakthrough point, called the saturation point, is determined in an analogue manner with the exception that the difference between the signals measured on the two detectors reaches another value for instance 70%.

In certain embodiments the first guard column **2** is connected to either a feed tank **8** or a waste receptacle **9** via a first valve **10** and the second guard column **3** is connected to either a feed tank **15** or a waste receptacle **16** via a second valve **17,** with the proviso that when the first guard column is connected to a feed tank, then the second guard column is connected to a waste receptacle and when the first guard column is connected to a waste receptacle, then the second guard column is connected to a feed tank. In one embodiment the determining unit **18** is electrically connected to the first and second valves and adapted to control the positions of said first and second valves. An advantage of this arrangement is that when the determining unit detects a breakthrough or a saturation point, it can automatically divert the exit flow from the main column to e.g. a feed tank.

In some embodiments the chromatography system also comprises a third valve **12** between the main column **1** and the first guard column **2,** with the third valve **12** adapted to divert fluid from the main column **1** to an eluate tank **11** or to waste receptacle **16,** as well as a fourth valve **14** between the main column **1** and the second guard column **3,** where the fourth valve **14** is adapted to divert fluid from the main column **1** to an eluate tank **13** or to waste receptacle **16,** and wherein the determining unit **18** is adapted to control the positions of the third and fourth valves. One advantage of this arrangement is that when the determining unit detects the completion of a wash cycle, it can automatically start an elution cycle. A second advantage of this arrangement is that when the determining unit detects the breakthrough point, it can automatically connect the second guard column **3** in series with main column **1.** This prevents the second guard column **3** from exposure to product depleted feed stream.

In certain embodiments said first and second guard columns comprise a chromatography resin having essentially the same selectivity as the chromatography resin in the main column. This means that the resin in the guard columns and the main column bind the same substances at given conditions of ionic strength, pH etc. To give the same selectivity, the resins can be substituted with the same type of ligand, suitably with approximately the same ligand content or with less than about 20% difference in ligand content. An advantage of having essentially the same selectivity is that any target substance breakthrough from the main column will be captured by the guard column after the main column.

In some embodiments said main column and said first and second guard columns comprise a chromatography resin with Fc fragment-binding affinity ligands. Such ligands are commonly used for the capture step in monoclonal antibody processing, where their high cost puts pressure on increasing the step efficiency and the lifetime of the resins. They have a very high selectivity for antibodies, allowing the use of a single step gradient for elution, which is particularly advantageous for the methods and systems of the invention. The affinity ligand can be a proteinaceous ligand, such as e.g. Protein A, a mutant variety of Protein A as described in e.g. EP1485407B1, WO2008039141, WO2010080065, EP2202310A2, EP2157099 A1, JP2006304633, US20100168395, CN101337986, WO2009146755 etc, Protein G or an Fc-binding single domain antibody fragment e.g. as described in WO2009011572. Alternatively, the affinity ligand can be a peptide, nucleic acid or a small organic molecule. The ligand content of the resin can e.g. be in the range of 1-15 mg/ml resin.

In some embodiments said first and second guard columns comprise a chromatography resin having a volume average particle size at least about 10%, such as at least about 25% or about 50%, higher than the volume average size of the chromatography resin in the main column. The average particle size of the main column resin can be about 50-100 microns, such as 80-95 microns, while the average particle size of the guard column resin can be about 100-250 microns, such as 130-210 microns. The average particle size of the resin can advantageously be the same throughout the first and second guard columns. In a specific example, the main column can be packed with the Protein A-functional MabSelect resin (GE Healthcare Life Sciences) of 85 micron average particle size and the guard columns with Sepharose Big Beads (GE Healthcare Life Sciences) of 200 micron average particle size that have been functionalized with Protein A according to methods known in the art, e.g. as described in EP873353B1. An advantage of having larger particle size resin in the guard columns is that the back pressure will be lower, while the lower steepness of the breakthrough curve normally associated with larger particles is not an issue, since the guard columns do not have to be used in the vicinity of their breakthrough points.

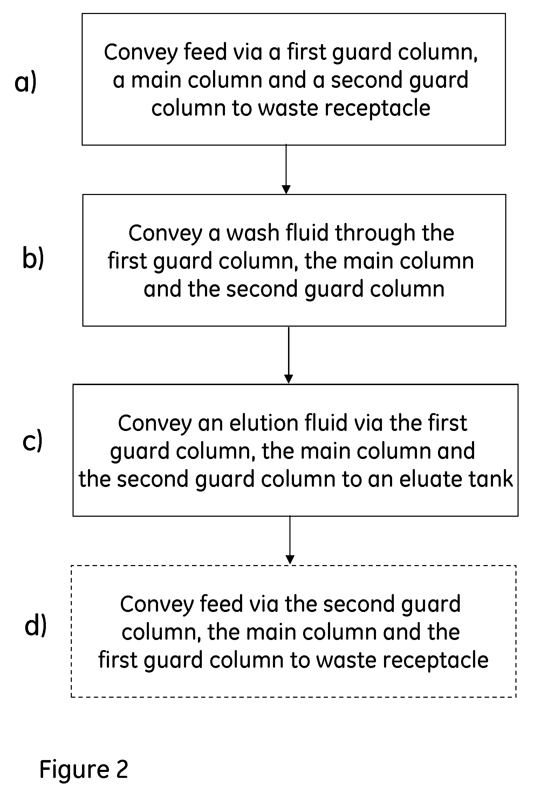

In one aspect illustrated by Figure 2, the present invention discloses a method for chromatographic separation of a target substance comprising the steps of:
a) loading the target substance on a main column **1** by conveying a feed from a feed tank **8** via a first guard column **2** through the main column **1** to either i) a waste receptacle **16** or ii) via a second guard column **3** to a waste receptacle **16,**
b) washing the columns by conveying a wash fluid via the first guard column **2** through the main column **1** and the second guard column **3** and
c) eluting the target substance by conveying an elution fluid via the first guard column **2** or the second guard column **3** through the main column **1** to an eluate tank **11,13.**

In the loading step a) a target substance, e.g. a biomolecule such as a protein, an immunoglobulin, IgG or a monoclonal antibody, can be bound to a chromatography resin in the first guard column and in the main column, so that only depleted feed is conveyed to the waste receptacle. This can go on until the main column shows product breakthrough. At this point the second guard column can be connected to the main column and the target substance not bound on the main column is then adsorbed on the second guard column. This process can go on until the first guard column and the main column are saturated and some target substance is bound to a chromatography resin in the second guard column. The flow can then be changed to the wash mode in step b), where wash fluid is conveyed through all three columns in any direction although preferably in the same direction as in step a), and any target substance leaching out complete, the flow can be changed to elution mode in step c), where the elution fluid is conveyed through one of the guard columns and the main column in any direction although preferably in the same direction as in step a), such as through the second guard column and then through the main column, to the eluate tank, where the separated target substance is collected. An advantage of this method is that any breakthrough target substance from the main column can be captured by a guard column both during loading and washing and then recovered during elution.

In certain embodiments the method further comprises a step of
d) loading the target substance on the main column **1** by conveying a feed from a feed tank **15** via the second guard column **3** through the main column **1** and either i) to a waste receptacle **9** or ii) to the first guard column **2** and to a waste receptacle **9.** This loading step is performed in the opposite direction to the loading step a) and can e.g. be run after a sequence of steps a), b) and c) in that order. An advantage of this is that the first guard column is ready to capture any product starting to break through the main column passing the breakthrough point.

In certain embodiments steps b) and c) are repeated after step d), with the flow in repeated steps b) and c) being run in the opposite direction of to the flow in the original steps b) and c). The flow in repeated step c) is run through the second guard column and then through the main column to the eluate tank **8.**

Step a) further comprises measuring the concentration of a target substance in the fluid exiting the main column and ending step a) when said concentration has reached a predetermined value.

In certain embodiments step a) further comprises determining a breakthrough point or a saturation point of the main column and ending step a) when said breakthrough or saturation point has been reached. An advantage of this is that the resin in the main column is efficiently utilized and essentially all breakthrough target substance is captured by a guard column.

In some embodiments step b) further comprises measuring the concentration of a target substance in the fluid exiting the main column and ending step b) when said concentration is lower than a predetermined value. An advantage of this is that the consumption of wash fluid is minimized.

## Claims

1. A chromatography system comprising a main column (1) comprising a chromatography resin, a first guard column (2) and a second guard column (3), wherein the first guard column (2) is connected to a first end (4) of the main column (1), the second guard column (3) is connected to a second end (5) of the main column,
wherein a first concentration detector (6) is connected between said first end (4) of the main column (1) and said first guard column (2) and a second concentration detector (7) is connected between said second end (5) of the main column (1) and said second guard column (3).

2. A chromatography system according to claim 1, wherein said first and second concentration detectors (6,7) are ultraviolet absorption detectors.

3. A chromatography system according to claim 1 or 2, further comprising a determining unit (18) electrically connected to said first and second concentration detectors and adapted to detect a feed signal being representative of the composition of a feed material provided to one end (4,5) of the main column and an effluent signal being representative of an effluent from the opposite end (5,4) of the main column.

4. A chromatography system according to claim 3, wherein the determining unit (18) is adapted to determine a breakthrough point and/or a saturation point of the main column (1).

5. A chromatography system according to any preceding claim, wherein the first guard column (2) is connected to either a feed tank (8) or a waste receptacle (9) via a first valve (10) and the second guard column (3) is connected to either a feed tank (15) or a waste receptacle (16) via a second valve (17), with the proviso that when the first guard column is connected to a feed tank, then the second guard column is connected to a waste receptacle and when the first guard column is connected to a waste receptacle, then the second guard column is connected to a feed tank.

6. A chromatography system according to claim 5, wherein a determining unit (18) is electrically connected to said first and second valves and adapted to control the positions of said first and second valves.

7. A chromatography system according to claim 6, further comprising a third valve (12) between the main column (1) and the first guard column (2), said third valve adapted to divert fluid from the main column (1) to an eluate tank (11) or to the waste receptacle (16), and a fourth valve (14) between the main column (1) and the second guard column (3), said fourth valve adapted to divert fluid from the main column (1) to an eluate tank (13) or to the waste receptacle (16), and wherein said determining unit (18) is adapted to control the positions of said third and fourth valves.

8. A chromatography system according to any preceding claim, wherein said main column and said first and second guard columns comprise a chromatography resin with Fc fragment-binding affinity ligands.

9. A method for chromatographic separation of a target substance using the system of claim 1, comprising the steps of:
a) loading the target substance on a main column (1) by conveying a feed from a feed tank (8) via a first guard column (2) through the main column (1) and a second guard column (3) to a waste receptacle (16), measuring the concentration of a target substance in the fluid exiting the main column and ending step a) when said concentration has reached a predetermined value
b) washing the columns by conveying a wash fluid via the first guard column (2) through the main column (1) and the second guard column (3)
c) eluting said target substance by conveying an elution fluid via the first guard column (2) or the second guard column (3) through the main column (1) to an eluate tank (11,13), and optionally a step of
d) loading the target substance on the main column (1) by conveying a feed from a feed tank (15) via the second guard column (3) through the main column (1) and the first guard column (2) to a waste receptacle (9).

10. A method according to claims 9, wherein step a) further comprises determining a breakthrough point or a saturation point of the main column by comparing the signal measured on the first detector (6) and the second detector (7)
and ending step a) when said
breakthrough or saturation point has been reached.

11. A method according to any one of claims 9-10, wherein step b) further comprises measuring the concentration of a target substance in the fluid exiting the main column and ending step b) when said concentration is lower than a predetermined value.

12. A method according to any one of claims 9-11, wherein said first and second guard columns comprise a chromatography resin having essentially the same selectivity as the chromatography resin in the main column, such as a chromatography resin with Fc fragment-binding affinity ligands.

13. A method according to any one of claims 9-12, wherein said first and second guard columns comprise a chromatography resin having a volume average particle size at least 10%, such as at least 25% or 50%, higher than the volume average size of the chromatography resin in the main column.

14. A method according to any one of claims 9-13, wherein the bed volumes of the first (2) and second (3) guard columns are each less than about 50%, such as less than about 25% or less than about 15%, of the bed volume of the main column (1).

## Patentansprüche

1. Chromatographiesystem umfassend eine Hauptsäule (1) umfassend ein Chromatographieharz, eine erste Vorsäule (2) und eine zweite Vorsäule (3), wobei die erste Vorsäule (2) mit einem ersten Ende (4) der Hauptsäule (1) verbunden ist und die zweite Vorsäule (3) mit einem zweiten Ende (5) der Hauptsäule verbunden ist, wobei ein erster Konzentrationsdetektor (6) zwischen dem ersten Ende (4) der Hauptsäule (1) und der ersten Vorsäule (2) und ein zweiter Konzentrationsdetektor (7) zwischen dem zweiten Ende (5) der Hauptsäule (1) und der zweiten Vorsäule (3) verbunden ist.

2. Chromatographiesystem nach Anspruch 1, wobei die ersten und zweiten Konzentrationsdetektoren (6, 7) UV-Absorptionsdetektoren sind.

3. Chromatographiesystem nach Anspruch 1 oder 2, ferner umfassend eine Bestimmungseinheit (18), die elektrisch mit den ersten und zweiten Konzentrationsdetektoren verbunden ist und angepasst ist, ein Zuführsignal zu erfassen, das für die Zusammensetzung eines Zuführungsmaterials, das einem Ende (4, 5) der Hauptsäule zur Verfügung gestellt wird, repräsentativ ist, und eines Ausflusssingales, das für einen Ausfluss aus dem gegenüberliegenden Ende (5, 4) der Hauptsäule repräsentativ ist.

4. Chromatographiesystem nach Anspruch 3, wobei die Bestimmungseinheit (18) angepasst ist, einen Durchbruchpunkt und/oder einen Sättigungspunkt der Hauptsäule (1) zu bestimmen.

5. Chromatographiesystem nach einem der vorangehenden Ansprüche, wobei die erste Vorsäule (2) mit entweder einem Zuführungsbehälter (8) oder einem Abfallaufnahmebehälter (9) über ein erstes Ventil (10) verbunden ist, und die zweite Vorsäule (3) entweder mit einem Zuführungsbehälter (15) oder einem Abfallaufnahmebehälter (16) über ein zweites Ventil (17) verbunden ist, unter der Maßgabe, dass wenn die erste Vorsäule mit einem Zuführungsbehälter verbunden ist, die zweite Vorsäule mit einem Abfallaufnahmebehälter verbunden ist, und wenn die erste Vorsäule mit einem Abfallaufnahmebehälter verbunden ist, die zweite Vorsäule mit einem Zuführungsbehälter verbunden ist.

6. Chromatographiesystem nach Anspruch 5, wobei eine Bestimmungseinheit (18) elektrisch mit den ersten und zweiten Ventilen verbunden ist, und angepasst ist, die Positionen der ersten und zweiten Ventile zu steuern.

7. Chromatographiesystem nach Anspruch 6, ferner umfassend ein drittes Ventil (12) zwischen der Hauptsäule (1) und der ersten Vorsäule (2), wobei das dritte Ventil angepasst ist, Flüssigkeit von der Hauptsäule (1) in einen Eluatbehälter (11) oder in den Abfallfaufnahmebehälter (16) abzulenken, und ein viertes Ventil (14) zwischen der Hauptsäule (1) und der zweiten Vorsäule (3), wobei das vierte Ventil angepasst ist, Flüssigkeit von der Hauptsäule (1) in einen Eluatbehälter (13) oder in den Abfallaufnahmebehälter (16) umzulenken, und wobei die Bestimmungseinheit (18) angepasst ist, die Positionen der dritten und vierten Ventile zu steuern.

8. Chromatographiesystem nach einem der vorangehenden Ansprüche, wobei die Hauptsäule und die ersten und zweiten Vorsäulen ein Chromatographieharz mit Fc-Fragmentbindenden Affinitätsliganden umfassen.

9. Verfahren zur chromatographischen Trennung einer Zielsubstanz unter Verwendung des Systems nach Anspruch 1, umfassend die folgenden Schritte:
a) Laden der Zielsubstanz auf eine Hauptsäule (1) durch das Befördern eines Zufuhrmaterials aus dem Zuführungsbehälter (8) über eine erste Vorsäule (2) durch die Hauptsäule (1) und eine zweite Vorsäule (3) zu einem Abfallaufnahmebehälter (16), Messen der Konzentration an Zielsubstanz in dem Fluid, das die Hauptsäule verlässt, und Beenden von Schritt a) wenn die Konzentration einen vorherbestimmten Wert erreicht hat,
b) Waschen der Säulen durch das Befördern einer Waschflüssigkeit über eine erste Vorsäule (2) durch die Hauptsäule (1) und die zweite Vorsäule (3),
c) Eluieren der Zielsubstanz durch das Befördern einer Elutionsflüssigkeit über die erste Vorsäule (2) oder die zweite Vorsäule (3) durch die Hauptsäule (1) zu einem Eluatbehälter (11, 13), und optional ein Schritt des
d) Ladens der Zielsubstanz auf die Hauptsäule (1) durch Befördern eines Zufuhrmaterials von einem Zuführungsbehälter (15) über die zweite Vorsäule (3) durch die Hauptsäule (1) und die erste Vorsäule (2) zu einem Abfallaufnahmebehälter (9).

10. Verfahren nach Anspruch 9, wobei Schritt a) ferner das Bestimmen eines Durchbruchpunktes oder eines Sättigungspunktes der Hauptsäule durch das Vergleichen des Signals, das auf dem ersten Detektor (6) und dem zweiten Detektor (7) gemessen wird, und einen Endschritt a) wenn der Durchbruchpunkt oder Sättigungspunkt erreicht wurde, umfasst.

11. Verfahren nach einem der Ansprüche 9 bis 10, wobei Schritt b) ferner das Messen der Konzentration einer Zielsubstanz in der Flüssigkeit, die die Hauptsäule verlässt und Beendigungsschritt b) umfasst, wenn die Konzentration geringer als ein vorherbestimmter Wert ist.

12. Verfahren nach einem der Ansprüche 9 bis 11, wobei die ersten und zweiten Vorsäulen ein Chromatographieharz umfassen, die im Wesentlichen dieselbe Selektivität aufweisen wie das Chromatographieharz in der Hauptsäule, wie zum Beispiel ein Chromatographieharz mit Fc-Fragmentbindenden Affinitätsliganden.

13. Verfahren nach einem der Ansprüche 9 bis 12, wobei die ersten und zweiten Vorsäulen ein Chromatographieharz umfassen, das eine volumengemittelte Teilchengröße aufweisen, die wenigstens 10%, wie zum Beispiel wenigstens 25% oder 50%, höher als die volumengemittelte Größe des Chromatographieharzes in der Hauptsäule ist.

14. Verfahren nach einem der Ansprüche 9 bis 13, wobei die Bettvolumen der ersten (2) und zweiten (3) Vorsäulen weniger als etwa 50% betragen, wie zum Beispiel weniger als etwa 25% oder weniger als etwa 15% des Bettvolumens der Hauptsäule (1).

## Revendications

1. Système chromatographique comprenant une colonne principale (1) comprenant une résine chromatographique, une première colonne de garde (2) et une seconde colonne de garde (3), dans lequel la première colonne de garde (2) est raccordée à une première extrémité (4) de la colonne principale (1), tandis que la seconde colonne de garde (3) est raccordée à une seconde extrémité (5) de la colonne principale,
dans lequel un premier détecteur de concentration (6) est raccordé entre ladite première extrémité (4) de la colonne principale (1) et ladite première colonne de garde (2) et un second détecteur de concentration (7) est raccordé entre ladite seconde extrémité (5) de la colonne principale (1) et ladite seconde colonne de garde (3).

2. Système chromatographique selon la revendication 1, dans lequel lesdits premier et second détecteurs de concentration (6, 7) sont des détecteurs absorbant les ultraviolets.

3. Système chromatographique selon la revendication 1 ou la revendication 2, comprenant en outre une unité de détermination (18) connectée électriquement auxdits premier et second détecteurs de concentration et susceptible de détecter un signal d'alimentation représentatif de la composition d'un matériau d'alimentation fourni à une première extrémité (4, 5) de la colonne principale et un signal d'effluent représentatif d'un effluent sortant de l'extrémité opposée (5, 4) de la colonne principale.

4. Système chromatographique selon la revendication 3, dans lequel l'unité de détermination (18) est à même de déterminer un point de rupture et/ou un point de saturation de la colonne principale (1).

5. Système chromatographique selon l'une quelconque des revendications précédentes, dans lequel la première colonne de garde (2) est raccordée à un réservoir d'alimentation (8) ou à un réceptacle de rebut (9) via une première soupape (10) et la seconde colonne de garde (3) est raccordée à un réservoir d'alimentation (15) ou à un réceptacle de rebut (16) via une deuxième soupape (17), à condition que, lorsque la première colonne de garde est raccordée à un réservoir d'alimentation, la seconde colonne de garde soit raccordée à un réceptacle de rebut et que, lorsque la première colonne de garde est raccordée à un réceptacle de rebut, la seconde colonne de garde soit raccordée à un réservoir d'alimentation.

6. Système chromatographique selon la revendication 5, dans lequel une unité de détermination (18) est connectée électriquement auxdites première et deuxième soupapes et est à même de commander les positions desdites première et deuxième soupapes.

7. Système chromatographique selon la revendication 6, comprenant en outre une troisième soupape (12) entre la colonne principale (1) et la première colonne de garde (2), ladite troisième soupape étant à même de dévier le fluide provenant de la colonne principale (1) vers un réservoir d'éluat (11) ou vers le réceptacle de rebut (16), et une quatrième soupape (14) entre la colonne principale (1) et la seconde colonne de garde (3), ladite quatrième soupape étant à même de dévier le fluide de la colonne principale (1) vers un réservoir d'éluat (13) ou vers le réceptacle de rebut (16), et dans lequel ladite unité de détermination (18) est à même de commander les positions desdites troisième et quatrième soupapes.

8. Système chromatographique selon l'une quelconque des revendications précédentes, dans lequel ladite colonne principale et lesdites première et seconde colonnes de garde comprennent une résine chromatographique avec des ligands d'affinité se liant à un fragment Fc.

9. Procédé de séparation chromatographique d'une substance cible en utilisant le système de la revendication 1, comprenant les étapes consistant à :
a) charger la substance cible sur une colonne principale (1) en acheminant une alimentation provenant d'un réservoir d'alimentation (8) via une première colonne de garde (2) à travers la colonne principale (1) et une seconde colonne de garde (3) vers un réceptacle de rebut (16), mesurer la concentration d'une substance cible dans le fluide sortant de la colonne principale et terminer l'étape a) lorsque ladite concentration a atteint une valeur prédéterminée,
b) laver les colonnes en acheminant un fluide de lavage via la première colonne de garde (2) à travers la colonne principale (1) et la seconde colonne de garde (3),
c) éluer ladite substance cible en acheminant un fluide d'élution via la première colonne de garde (2) ou la seconde colonne de garde (3) à travers la colonne principale (1) vers un réservoir d'éluat (11, 13) et éventuellement une étape consistant à :
d) charger la substance cible sur la colonne principale (1) en acheminant une alimentation provenant d'un réservoir d'alimentation (15) via la seconde colonne de garde (3) à travers la colonne principale (1) et la première colonne de garde (2) vers un réceptacle de rebut (9).

10. Procédé selon la revendication 9, dans lequel l'étape a) comprend en outre la détermination d'un point de rupture ou d'un point de saturation de la colonne principale en comparant le signal mesuré sur le premier détecteur (6) et le second détecteur (7) et l'achèvement de l'étape a) lorsque ledit point de rupture ou de saturation a été atteint.

11. Procédé selon l'une quelconque des revendications 9 et 10, dans lequel l'étape b) comprend en outre la mesure de la concentration d'une substance cible dans le fluide sortant de la colonne principale et l'achèvement de l'étape b) lorsque ladite concentration est inférieure à une valeur prédéterminée.

12. Procédé selon l'une quelconque des revendications 9 à 11, dans lequel lesdites première et seconde colonnes de garde comprennent une résine chromatographique ayant sensiblement la même sélectivité que la résine chromatographique de la colonne principale, notamment une résine chromatographique avec des ligands d'affinité se liant au fragment Fc.

13. Procédé selon l'une quelconque des revendications 9 à 12, dans lequel lesdites première et seconde colonnes de garde comprennent une résine chromatographique ayant une taille particulaire moyenne en volume au moins 10 %, notamment au moins 25 % ou 50 %, plus élevée que la taille moyenne en volume de la résine chromatographique dans la colonne principale.

14. Procédé selon l'une quelconque des revendications 9 à 13, dans lequel les volumes de lit de la première (2) et de la seconde (3) colonne de garde sont chacun inférieurs à environ 50 %, notamment inférieurs à environ 25 % ou inférieurs à environ 15 %, du volume de lit de la colonne principale (1).
